# EUROPEAN PATENT SPECIFICATION

(11) **EP 1 174 865 B1**
(45) Date of publication and mention of the grant of the patent: **30.09.2009**
(21) Application number: 01303814.6
(22) Date of filing: 26.04.2001
(51) Int. Cl.: G11B 7/125, G11B 7/135

(54) **Compatible optical pickup**
Kompatibles optisches Abtastgerät
Appareil de lecture optique compatible

(30) Priority: 22.07.2000 KR 2000042257
(43) Date of publication of application: 23.01.2002
(73) Proprietor: SAMSUNG ELECTRONICS CO., LTD., Suwon-City, Kyungki-do (KR)
(72) Inventor: Yoo, Jang-hoon, 102-307 Daerim Hyundai 1-cha Apt., Seoul (KR); Lee, Chul-woo, 103-604 Park Town Daerim Apt., Seongnam-si, Gyeonggi-do (KR); Kim, Jong-ryul, Siheung-si, Gyeonggi-do (KR)
(74) Representative: Kohler, Janet Wendy

(56) References cited:
- EP-A- 0 973 160
- EP-A- 0 996 121
- US-A- 6 043 911
- PATENT ABSTRACTS OF JAPAN vol. 1998, no. 03, 27 February 1998 (1998-02-27) & JP 9 306018 A (SONY CORP), 28 November 1997 (1997-11-28)

## Description

The present invention relates to an optical pickups compatible for recording media having different formats, and more particularly, to a compact optical pickup compatible for recording media with different formats, which adopts a single light device module in which two light beam sources for different wavelengths of light are installed.

In recent years, the need for an optical pickup capable of recording information on and/or reproducing information from a digital versatile disc-read only memory (DVD-ROM) at high densities be compatible with compact disc (CD) family media such as CD, recordable CD (CD-R), CD rewritable (CD-RW), CD interactive (CD-I) and CD plus graphics (CD+G) has arisen.

The standard thickness of existing CD family media is 1.2 mm, whereas the thickness of DVDs has been standardized to 0.6 mm in consideration of the allowable error in the tilt angle of a disc and the numerical aperture (NA) of an objective lens. Accordingly, when recording information on or reproducing information from a CD using an optical pickup designed for DVDs, spherical aberrations occur due to a difference in the thicknesses therebetween. Such spherical aberration cannot provide a light intensity sufficient for recording an information (radio frequency) signal or may deteriorate a reproduction signal from the CD. Also, DVDs and CD family media utilize different wavelengths of light for reproduction: CDs use light having a wavelength of about 780nm as a light beam source, whereas DVDs use light having a wavelength of about 650nm as a light beam source. Thus, for the compatibility with CDs, an optical pickup adopting a light beam source capable of emitting different wavelengths of light, and capable of focusing optical spots at different focal positions is required.

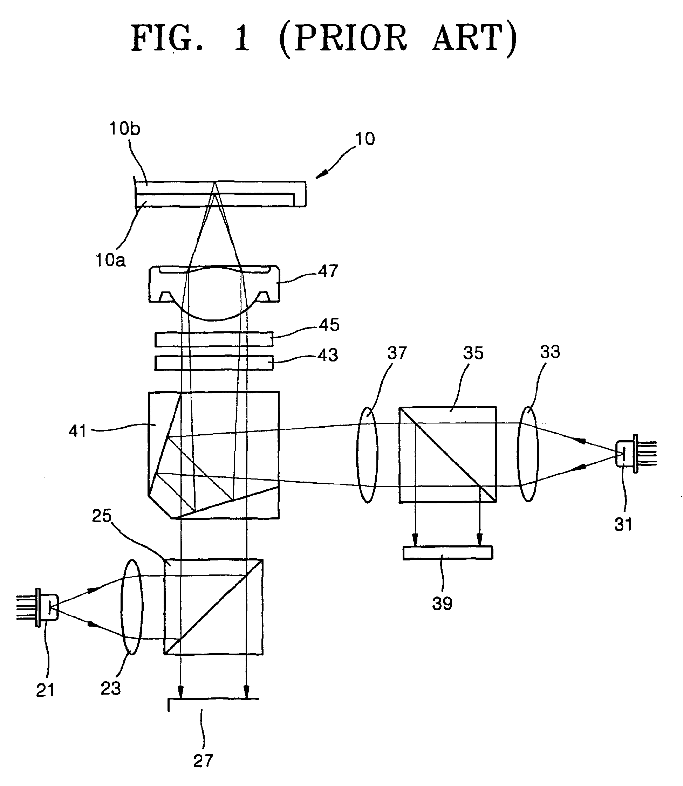

Referring to Figure 1, a conventional compatible optical pickup comprises a first light beam source 21 for emitting light having a wavelength of about 650nm, and a second light beam source 31 for emitting light having a wavelength of about 780nm. The first light beam source 21 is appropriate for a relatively thin disc 10a, such as a DVD, and the second light beam source 31 is appropriate for a relatively thick disc 10b, such as a CD.

Light emitted from the first light beam source 21 is condensed by a first collimator lens 23, parallel incident on a first polarization beam splitter (PBS) 25, and then reflected by the first PBS 25 toward the DVD 10a. After reflected by the relatively thin disc 10a, the reflected light is transmitted through the first PBS 25 and is then received by a first photodetector 27. Here, an interference filter 41 for changing the paths of light emitted from the first and second light beam sources 21 and 31, a quarter-wave plate 43, a variable diaphragm 45, and an objective lens 47 for condensing light incident are disposed on an optical path between the first PBS 25 and the disc 10.

Light emitted from the second light beam source 31 is condensed by a second collimator lens 33, parallel incident on a second PBS 35, transmitted through a condenser lens 37, and then incident on the interference filter 41. The light is reflected by the interference filter 41 and passes through the quarter-wave plate 43, the variable diaphragm 45 and the objective lens 47 in sequence to form an optical spot on the relatively thick disc 10b.

Light reflected by the relatively thick disc 10b is incident on the interference filter 41 through the objective lens 47, the variable diaphragm 45 and the quarter-wave plate 43, and then reflected by the interference filter 41 heading toward the second PBS 35. The light is reflected by the second PBS 35 and received by a second photodetector 39.

The interference filter 41, an optical element for transmitting or reflecting incident light depending on the wavelength of incident light, transmits the light originating from the first light beam source 21, and reflects the light originating from the second light beam source 31. The variable diaphragm 45 has a variable aperture, and defines the size of the light spot incident on the objective lens 47, such that the light beam enters the region of the objective lens 47 with an NA less than 0.45 or 0.47. The quarter-wave plate 43 is an optical element for changing the polarization of incident light. As each of the light beams from the first and second light beam sources 21 and 31 passes the quarter-wave plate 43 two times, the polarization of the incident beams changes, and then the light beams head toward the first PBS 25 and the second PBS 35, respectively. The objective lens 47 allows light from the first and second light beam sources \ 21 and 31 to be focused as a light spot on the recording surface of each of the DVD 10a and the CD 10b.

Although the conventional optical pickup having the configuration described above is convertible with CD-R using two light beam sources, the adoption of the variable diaphragm, which is manufactured through sophisticated and expensive processes, makes assembling of such optical pickup complicate and increases the manufacturing cost. In addition, the first and second light beam sources are separately constructed, so that the configuration of the optical pickup becomes complicated and the optical arrangement thereof is also difficult.

EP-A-0973160 discloses an optical head used for CD or DVD players. A wavelength sensitive hologram is used to combine a laser beam and a second laser beam of 650 nm and 780 nm wavelengths respectively. This document forms the pre-characterising portion of claim 1 appended hereto.

It is an aim of embodiments of the present invention to provide a compact optical pickup compatible for recording media having different formats, in which first and second light beam sources for different wavelengths of light are installed in a single light device module, and the optical paths of light beams from the first and second light beam sources are adjusted using a hologram light coupler.

According to present invention there is provided an optical pickup as defined in appended claim 1.

Preferred embodiments are defined in the dependent claims.

For a better understanding of the invention, and to show how embodiments of the same may be carried into effect, reference will now be made, by way of example, to the accompanying diagrammatic drawings in which:
Figure 1 is a schematic view showing the optical arrangement of a conventional compatible optical pickup;
Figure 2 is a schematic view showing the optical arrangement of an optical pickup compatible for recording media having different formats according to embodiments of the present invention;
Figure 3 is a sectional view showing the pattern of a first embodiment of a hologram light coupler adopting in the optical pickup;
Figure 4 is a graph showing variations of transmittance with respect to the pattern depth of the hologram light coupler of Figure 3;
Figure 5 illustrates the diffraction efficiency of the hologram light coupler of Figure 3;
Figure 6 is a sectional view showing the pattern of a second embodiment of the hologram light coupler adopted in the optical pickup;
Figure 7 is a graph showing variations of transmittance with respect to the pattern depth of the hologram light coupler of Figure 6;
Figure 8 is a sectional view showing the pattern of a third embodiment of the hologram light coupler adopted in the optical pickup;
Figure 9 is a graph showing variations of transmittance with respect to the pattern depth of the hologram light coupler of Figure 8;
Figure 10 is a sectional view showing the pattern of a fourth embodiment of the hologram light coupler adopted in the optical pickup;
Figure 11 is a graph showing variations of transmittance with respect to the pattern depth of the hologram light coupler of Figure 10;
Figure 12 is a schematic front view of an objective lens adopted in the compatible optical pickup; and
Figure 13 is a schematic view showing the major parts of the compatible optical pickup.

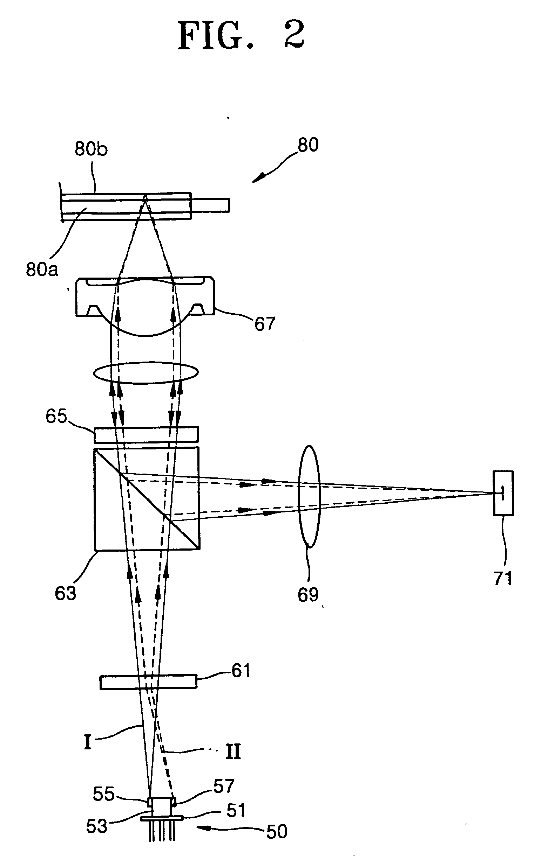

Figure 2 shows an optical pickup compatible for recording media having different formats includes a light device module 50, which includes first and second light beam sources 55 and 57 for emitting a first light beam I and a second light beam II having different wavelengths, respectively, a hologram light coupler 61 by which the first and second light beams I and II from the light device module 50 are guided to travel along the same optical path, an optical path changing unit for altering the traveling path of incident light, an objective lens 67 for focusing incident light on an optical recording medium 80, and a photodetector 71 for receiving light passed through the objective lens 67 and the optical path changing unit after having been reflected from the recording medium 80.

In particular, the light device module 50 includes a substrate 51, a mount 53 on the substrate 51, and the first and second light beam sources 55 and 57 attached to both sides of the mount 53, respectively. The first and second light beam sources 55 and 57 as edge emitting lasers emit light beams at different diverging angles The first light beam I from the first light beam source 55 has a wavelength of about 650 nm, and is appropriate for the relatively thin optical disc 80a such as a DVD. The second light beam II from the second light beam source 57 has a wavelength of about 780 nm, and is appropriate for the relatively thick optical disc 80b such as CDs. The positional tolerance between the first and second light beam sources 55 and 57 can be controlled by adjusting the location of the hologram light coupler 61 on the optical path between the light device module 50 and the objective lens 67.

The hologram light coupler 61 guides the first and second light beams I and II along the same optical path and directs the first and second light beams I and II toward the optical recording medium 80. The hologram light coupler 61 has a hologram pattern 61a at one surface thereof to diffract and transmit incident light. The hologram light coupler 61 directly transmits the first light beam I entering in perpendicular to the light receiving surface of the hologram light coupler, and diffracts and transmits most of the second light beam II incident at an angle, such that the second light beam II becomes parallel to the first light beam I. Transmittance of the hologram light coupler 61 is determined by the depth of the hologram pattern 61a, the pitch of the hologram pattern 61, and the configuration of the hologram pattern 61. It is preferable that the hologram pattern 61a of the hologram light coupler 61 has a stepped pattern including at least two steps.

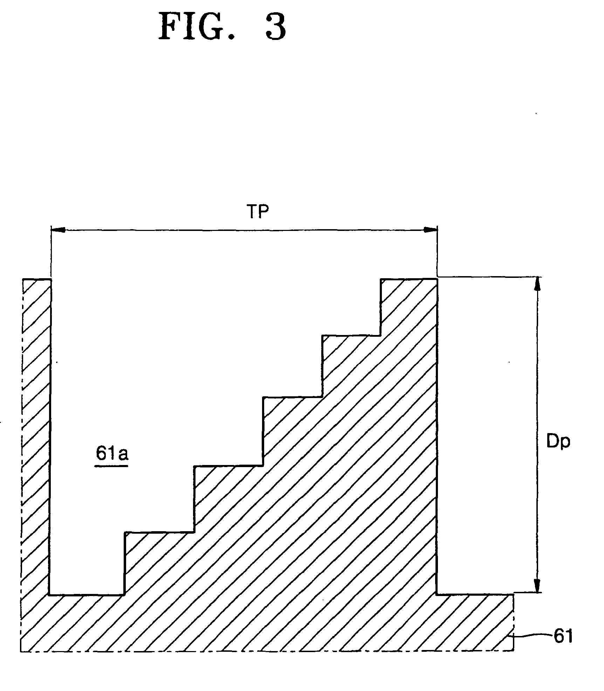

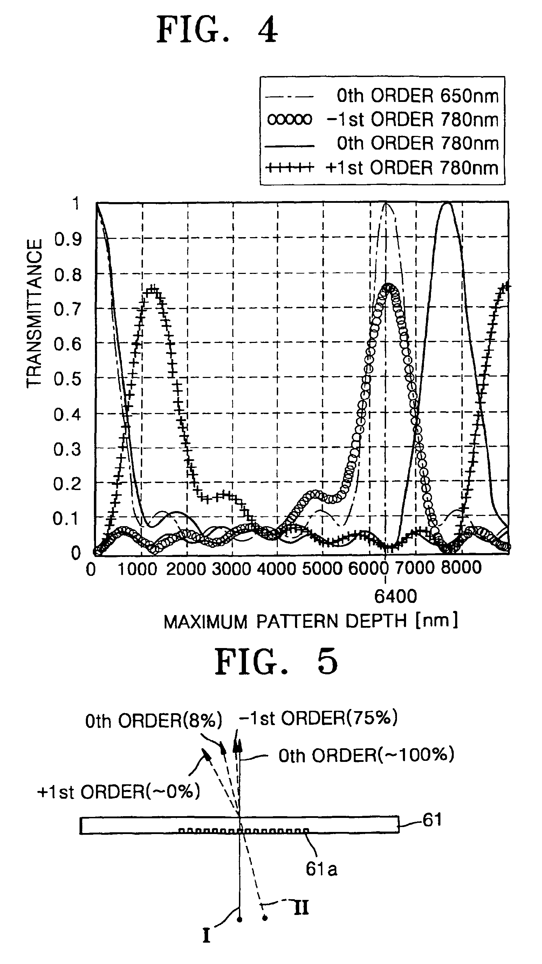

Figure 3 illustrates an example of the hologram pattern with five steps, and Figure 4 illustrates variations of transmittance of the first and second light beams I and II with respect to the variations of maximum pattern depth Dp of the hologram pattern of Figure 3. Referring to Figure 4, at a maximum pattern depth Dp of about 6400 nm, the transmittance of the hologram light coupler 61 is about 1.0 for the principle zeroth order maximum of the first light beam I having a 650nm wavelength. The second light beam II is diffracted and transmitted into zeroth order and ±1st order diffracted beams. The transmittance of the hologram light coupler 61 is about 8% for the zeroth order diffracted beam, almost 0% for the +1st order diffracted beam, and about 75% for the -1st order diffracted beam with respect to the amount of the incident light. The -1st order diffracted beam serves as the effective beam for the second light beam II, and travels parallel to the zeroth order diffracted beam from the first light beam I.

As previously mentioned, the hologram light coupler 61 is appropriately located on the optical path such that the first and second light beams I and II from the first and second light beam sources 55 and 57 installed in the light device module 80, but at different angles with respect to the optical axis, are guided along the same optical path and go toward the optical recording medium 80.

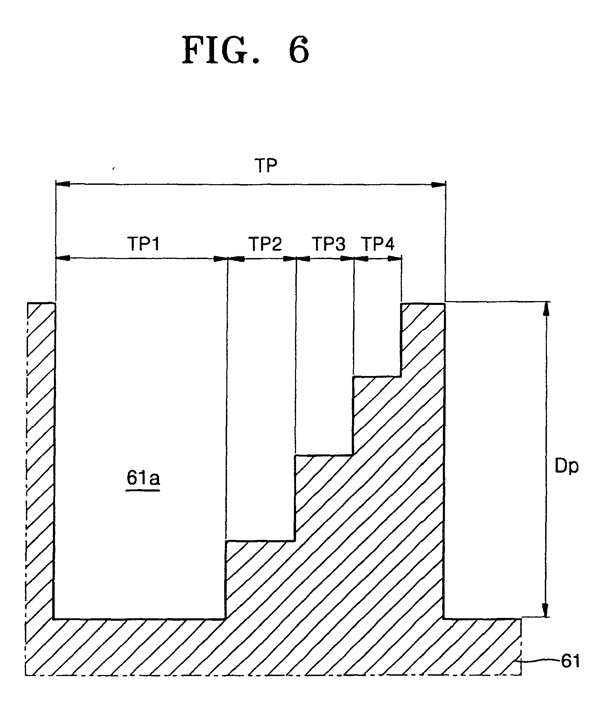

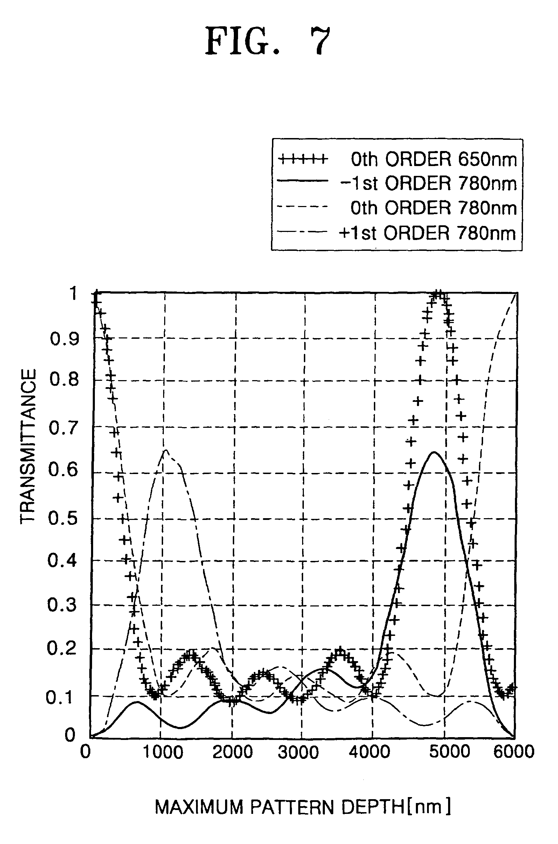

Although the hologram light coupler 61 of Figure 3 is designed to have the 5-step hologram pattern, the hologram pattern of the hologram light coupler 61 can be varied as shown in Figures 6, 8 and 10. Figure 6 illustrates a 4-step hologram pattern for the hologram light coupler 61, and Figure 7 illustrates variations of transmittance for the first and second light beams I and II with respect to the maximum pattern depth Dₚ. In designing the hologram pattern shown in Figure 6, the phase of light beam is also considered. For the 4-step hologram pattern of Figure 6, the pitch TP1 at the maximum pattern depth Dp is larger than the pitches TP2, TP3 and TP4 for the other steps.

Referring to Figure 7, at a maximum pattern depth Dp of about 4,900 nm, the transmittance of the hologram light coupler 61 is about 1.0 for the zeroth order maximum of the first light beam I having a 650nm wavelength. The second light beam II is diffracted and transmitted into zeroth order and ±1st order diffracted beams. The transmittance of the hologram light coupler 61 is about 10% for the zeroth order diffracted beam, almost 0% for the +1^{st} order diffracted beam, and about 65% for the - 1st order diffracted beam with respect to the amount of the incident light. The -1st order diffracted beam serves as the effective beam for the second light beam II, and travels parallel to the zeroth order diffracted beam from the first light beam I.

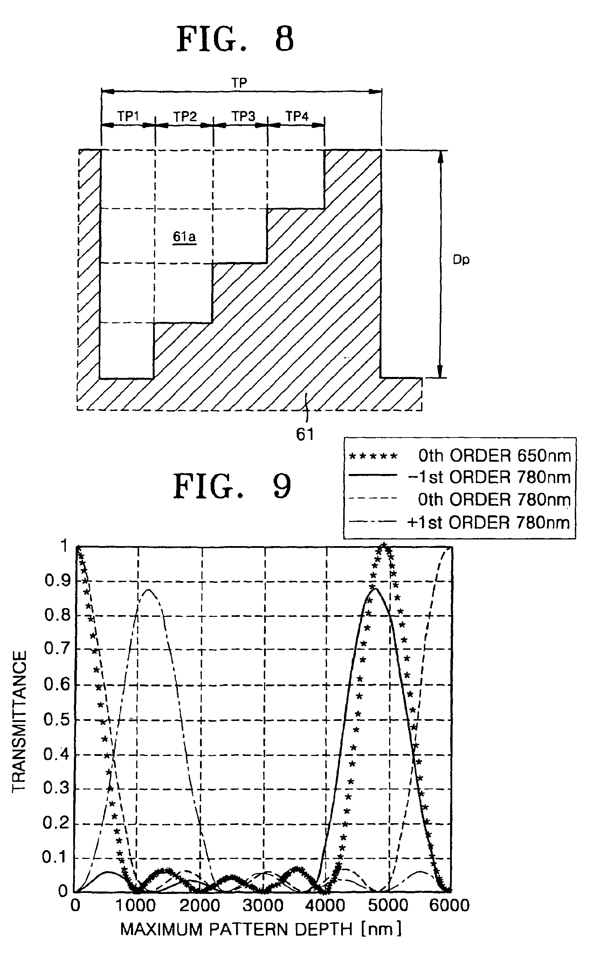

Figure 8 illustrates another 4-step hologram pattern for the hologram light coupler 61, in which no phase of light beam is considered, and Figure 9 illustrates variations of transmittance for the first and second light beams I and II with respect to the maximum pattern depth Dₚ. For the 4-step hologram pattern of Figure 8, the pitch TP1 at the maximum pattern depth Dp is equal to the pitches TP2, TP3 and TP4 for each of the other steps.

Referring to Figure 9, at maximum pattern depth Dₚ of about 4900 nm, the transmittance of the hologram light coupler 61 is about 1.0 for the zeroth order maximum of the first light beam I having a 650nm wavelength. The transmittance of the hologram light coupler 61 is almost 0% for both the zeroth order diffracted beam and +1st order diffracted beam from the second light beam II, and about 86% for the -1st order diffracted beam with respect to the amount of the incident light. The -1st order diffracted beam serves as the effective beam for the second light beam II, and travels parallel to the zeroth order diffracted beam from the first light beam I.

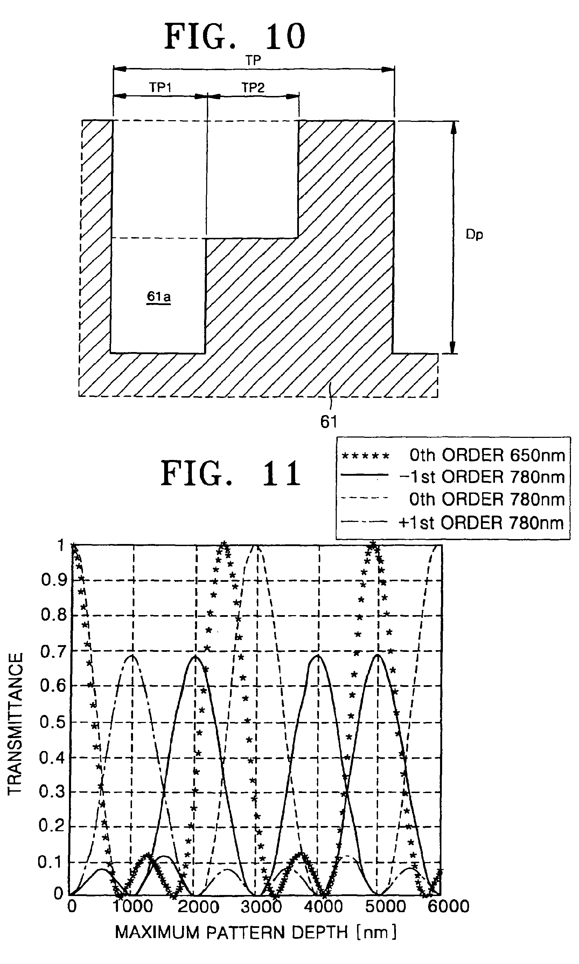

Figure 10 illustrates a 2-step hologram pattern for the hologram light coupler 61, in which no phase of light beam is considered, and Figure 11 illustrates variations of transmittance for the first and second light beams I and II with respect to the maximum pattern depth Dp. For the 2-step hologram pattern of Figure 10, the pitch TP1 at the maximum pattern depth Dp is equal to the pitch TP2 of the other step of the hologram pattern.

Referring to Figure 11, at a maximum pattern depth Dp of about 4900 nm, the transmittance of the hologram light coupler 61 is about 1.0 for the zeroth order maximum of the first light beam I of wavelength 650nm. The transmittance of the hologram light coupler 61 is almost 0% for both the zeroth order diffracted beam and +1st order diffracted beam from the second light beam II, and about 68% for the -1st order diffracted beam with respect to the amount of the incident light. The -1st order diffracted beam serves as the effective beam for the second light beam II, and travels parallel to the zeroth order diffracted beam from the first light beam I.

As can be inferred from the examples of the hologram pattern for the hologram light coupler 61 illustrated above, the maximum pattern depth Dp of the hologram light coupler 61 can be varied according to the stepped configuration. It is preferable that the maximum hologram depth Dp of the hologram light coupler satisfies the expression: 4000 nm ≤ Dₚ ≤ 7000 nm.

As previously mentioned, the zeroth order diffracted beam is utilized as the effective beam for the first light beam I, and the -1st order diffracted beam is utilized as the effective beam for the second light beam II. For this reason, the first and second light beams I and II emerging from the different light beam sources separated from each other can travel on the same path. The first and second light beams I and II passed through the hologram light coupler 61 diverges at different angles, so that the first light beam I is focused on the relatively thin optical disc 80a and the second light beam II is focused on the relatively thick optical disc 80b.

Turning to Figure 2, the optical path changing unit includes a polarization beam splitter (PBS) 63 for altering the traveling path of incident light beams by transmitting or reflecting incident light beams according to their polarization, and a quarter-wave plate 65, which is disposed on the optical path between the PBS 63 and the objective lens 67, for changing the polarization of incident light beams. The light beams emitted from the light device module 50 pass through the PBS 63 and go toward the optical recording medium 80.

As a light beam heading toward the optical recording medium 80, and the light beam reflected from the optical recording medium 80 pass through the quarter-wave plate 65, the polarization of incident light beam changes. After the light beam reflected by the optical recording medium 80 is incident on the PBS 63, the incident light beam is reflected by the PBS 63 such that it goes toward the photodetector 71.

The objective lens 67 focuses the incident first or second light beams I and II on the relatively thick disc 80a or the relatively thin disc 80b, respectively. To achieve this, the objective lens 67 has a light receiving surface for receiving light emitted from the light device module 50, and a light emitting surface which faces the optical recording medium 80. It is preferable that at least one of the light receiving and transmitting surfaces is divided into concentric sections by at least one annular region. Here, each of the sections has a different aspheric curvature such that light beams passed through the sections can be focused at different positions.

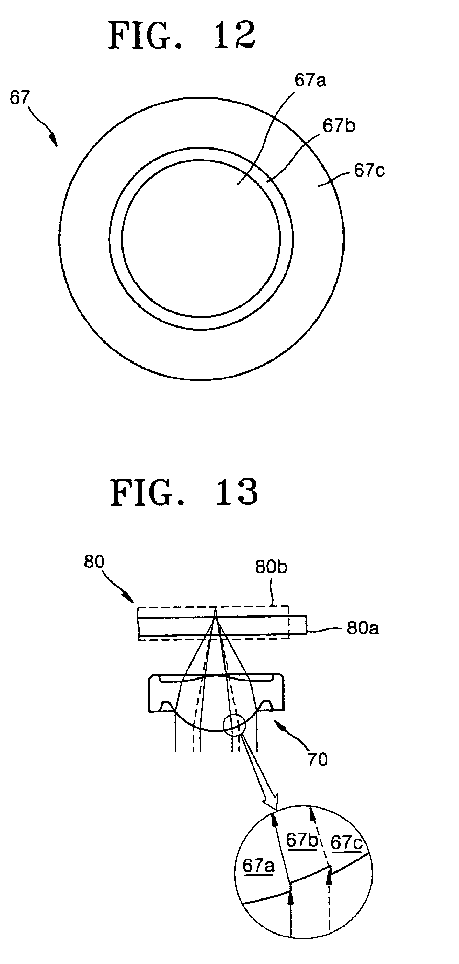

In particular, referring to Figures 12 and 13, the objective lens 67 includes a near-axis region 67a, an annular lens region 67b and a far-axis region 67c. The annular lens region 67a located between the near-axis region 67a and the far-axis region 67c may be formed as a circular or elliptical ring. The annular lens region 67b has an aspherical surface. It is preferable that the annular lens region 67b is optimized for the relatively thick optical disc 80b.

When the relatively thin optical disc 80a is employed as the optical recording medium 80, light is emitted from the first light beam source 55 and then focused as a light spot on the information recording surface of the relatively thin optical disc 80a through the far-axis region 67a. In contrast, light emerging from the annular lens region 67b is scattered.

On the other hand, when the relatively thick optical disc 80a is employed as the optical recording medium 80, light is emitted from the second light beam source 55, and then focused as a light spot on the information recording surface of the relatively thick optical disc 80c through both the annular lens 67b and the near-axis region 67a.

The optical pickup may further include a collimating lens 66 on the optical path between the objective lens 67 and the quarter-wave plate 65, for condensing incident light. The photodetector 71 receives the first light beam I or second light beam II light incident from the optical path changing unit after having been reflected from the optical recording medium 80, and detects an information signal and error signals from the incident light. A sensor lens 69 for causing astigmatism to light may further disposed on the optical path between the PBS 63 and the photodetector 71.

As previously mentioned, the optical pickup, which is compatible for recording media having different formats, adopts a single light device module in which first and second light beam sources for different wavelengths of light are installed, and uses a hologram light coupler such that light beams from the first and second light beam sources, which are separated from each other, are guided along the same optical path. In addition, the optical pickup according to the present invention detects an information signal and error signals with a single photodetector. Thus, the configuration of the optical pickup becomes compact.

While this invention has been particularly shown and described with reference to preferred embodiments thereof, it will be understood by those skilled in the art that various changes in form and details may be made therein without departing from the scope of the invention as defined by the appended claims.

## Claims

1. An optical pickup compatible for recording media having different formats, the optical pickup comprising:
a light device module (50) having a first light beam source (55) for emitting a first light beam having a wavelength of about 650nm and a second light beam source (57) for emitting a second light beam, having a wavelength of about 780nm;
a hologram light coupler (61) having a light receiving surface, wherein the first light beam enters perpendicular to the light receiving surface and the second light beam enters at an angle to the light receiving surface, the hologram light coupler (61) guiding the Zeroth order diffracted beam of the first light beam as a first effective beam and separately guiding the -1st order diffracted beam of the second light beam as a second effective beam such that the first and second effective light beams go toward a corresponding recording medium (80) along the same optical path;
an optical path changing unit (63, 65) disposed on said optical path for altering the optical path of said incident effective light beams after having been reflected from said recording medium;
an objective lens (67) disposed on an optical path between the optical path changing unit and the corresponding recording medium (80), for focusing the effective light beams on the corresponding recording medium (80); and
a photodetector (71) for receiving the effective light beams incident from the optical path changing unit after having been reflected from the corresponding recording medium (80), and detecting an information signal and error signals from the received light beams;
wherein the hologram light coupler includes a hologram pattern;
**characterised in that**:
a maximum pattern depth Dₚ of the hologram pattern satisfies the expression: 4000 nm ≤ Dₚ ≤ 7000 nm.

2. The optical pickup of claim 1, wherein the hologram pattern (61a) allows the first light beam entering in perpendicular to one surface of the hologram light coupler to directly transmit, and almost all the second light beam entering at an angle to diffract and transmit, such that the second light beam travels parallel to the first light beam.

3. The optical pickup of claim 1 or 2, wherein the hologram pattern has a stepped configuration with at least two steps.

4. The optical pickup of claim 1, wherein a positional tolerance between the first and second light beam sources is controlled by adjusting the location of the hologram light coupler (61) on the optical path between the light device module (50) and the objective lens (67).

5. The optical pickup of any of claims 1 through 4, wherein the optical path changing unit includes:
a polarization beam splitter (63) for altering the traveling path of an incident light beam by transmitting or reflecting the incident light beam according to the polarization of the incident light beam; and
a quarter-wave plate (65) disposed on the optical path between the polarization beam splitter (63) and the objective lens (67), for changing the polarization of an incident light beam.

6. The optical pickup of any of claims 1 through 5, wherein the objective lens (67) has a light receiving surface for receiving the first or second light beam emitted from the light device module, and a light emitting surface facing the corresponding recording medium, and at least one of the light receiving and transmitting surfaces of the objective lens is divided into sections by at least one an annular region (67b), the sections being concentric with each other and having different aspheric curvatures.

## Patentansprüche

1. Kompatibles optisches Abtastgerät für Aufzeichnungsmedien unterschiedlicher Formate, wobei das optische Abtastgerät Folgendes umfasst:
ein Lichteinrichtungsmodul (50) mit einer ersten Lichtstrahlquelle (55) zur Abgabe eines ersten Lichtstrahls mit einer Wellenlänge von ungefähr 650 nm und einer zweiten Lichtstrahlquelle (57) zur Abgabe eines zweiten Lichtstrahls mit einer Wellenlänge von ungefähr 780 nm;
einen Hologrammlichtkoppler (61) mit einer Lichtempfangsfläche, wobei der erste Lichtstrahl senkrecht zur Lichtempfangsfläche eintritt und der zweite Lichtstrahl in einem Winkel zur Lichtempfangsfläche eintritt, wobei der Hologrammlichtkoppler (61) den gebeugten Strahl nullter Ordnung des ersten Lichtstrahls als einen ersten Effektivlichtstrahl leitet und separat den gebeugten Strahl -1. Ordnung des zweiten Lichtstrahls als einen zweiten Effektivlichtstrahl leitet, so dass der erste und zweite Effektivlichtstrahl in Richtung eines entsprechenden Aufzeichnungsmediums (80) den gleichen Lichtweg entlang laufen;
eine Lichtwegänderungseinheit (63, 65), die zum Verändern des Lichtwegs der einfallenden Effektivlichtstrahlen nach ihrer Reflexion an dem Aufzeichnungsmedium im Lichtweg angeordnet ist;
eine Objektivlinse (67), die in einem Lichtweg zwischen der Lichtwegänderungseinheit und dem entsprechenden Aufzeichnungsmedium (80) zum Fokussieren der Effektivlichtstrahlen auf dem entsprechenden Aufzeichnungsmedium (80) angeordnet ist; und
einen Photodetektor (71) zum Empfangen der einfallenden Effektivlichtstrahlen von der Lichtwegänderungseinheit nach ihrer Reflexion an dem entsprechenden Aufzeichnungsmedium (80) und zum Erfassen eines Informationssignals und Fehlersignals von den empfangenen Lichtstrahlen;
wobei der Hologrammlichtkoppler ein Hologrammmuster enthält;
**dadurch gekennzeichnet, dass**
eine maximale Mustertiefe D- des Hologrammmusters dem Ausdruck: 4000 nm ≤ D_{P} ≤ 7000 nm genügt.

2. Optisches Abtastgerät nach Anspruch 1, wobei das Hologrammmuster (61a) den ersten Lichtstrahl, der senkrecht zu einer Fläche des Hologrammlichtkopplers eintritt, direkt durchlässt und fast den gesamten zweiten Lichtstrahl, der in einem Winkel eintritt, beugt und durchlässt, so dass der zweite Lichtstrahl parallel zum ersten Lichtstrahl läuft.

3. Optisches Abtastgerät nach Anspruch 1 oder 2, wobei das Hologrammmuster eine gestufte Konfiguration mit mindestens zwei Stufen aufweist.

4. Optisches Abtastgerät nach Anspruch 1, wobei eine Positionstoleranz zwischen der ersten und zweiten Lichtstrahlquelle durch Einstellen des Ortes des Hologrammlichtkopplers (61) in dem Lichtweg zwischen dem Lichteinrichtungsmodul (50) und der Objektivlinse (67) gesteuert wird.

5. Optisches Abtastgerät nach einem der Ansprüche 1 bis 4, wobei die Lichtwegänderungseinheit Folgendes enthält:
einen Polarisationsstrahlenteiler (63) zum Verändern des Laufwegs eines einfallenden Lichtstrahls durch Durchlassen oder Reflexion des einfallenden Lichtstrahls gemäß der Polarisation des einfallenden Lichtstrahls; und
eine Viertelwellenplatte (65), die zum Ändern der Polarisation eines einfallenden Lichtstrahls in dem Lichtweg zwischen dem Polarisationsstrahlenteiler (63) und der Objektivlinse (67) angeordnet ist.

6. Optisches Abtastgerät nach einem der Ansprüche 1 bis 5, wobei die Objektivlinse (67) eine Lichtempfangsfläche zum Empfang des von dem Lichteinrichtungsmodul abgegebenen ersten oder zweiten Lichtstrahls und eine dem entsprechenden Aufzeichnungsmedium zugewandte Lichtabgabefläche hat und die Lichtempfangs- und/oder -durchlassfläche der Objektivlinse in Abschnitte von mindestens einem Ringbereich (67b) aufgeteilt wird oder werden, wobei die Abschnitte miteinander konzentrisch sind und unterschiedliche asphärische Krümmungen aufweisen.

## Revendications

1. Lecteur optique compatible pour des supports d'enregistrement ayant des formats différents, le lecteur optique comprenant :
un module à dispositif générateur de lumière (50) comportant une première source de faisceau lumineux (55) destinée à émettre un premier faisceau lumineux ayant une longueur d'onde d'environ 650 nm et une seconde source de faisceau lumineux (57) destinée à émettre un second faisceau lumineux ayant une longueur d'onde d'environ 780 nm ;
un coupleur de lumière d'hologramme (61) ayant une surface de réception de lumière, dans lequel le premier faisceau lumineux pénètre perpendiculairement à la surface de réception de lumière et le second faisceau lumineux pénètre sous un certain angle par rapport à la surface de réception de lumière, le coupleur de lumière d'hologramme (61) guidant le faisceau diffracté d'ordre zéro du premier faisceau lumineux sous la forme d'un premier faisceau effectif et guidant séparément le faisceau diffracté d'ordre -1 du second faisceau lumineux sous la forme d'un second faisceau effectif, de façon à ce que les premier et second faisceaux lumineux effectifs se propagent vers un support d'enregistrement correspondant (80) le long du même chemin optique ;
une unité de modification du chemin optique (63, 65) disposée sur ledit chemin optique pour modifier le chemin optique desdits faisceaux lumineux effectifs incidents après qu'ils ont été réfléchis par ledit support d'enregistrement ;
un objectif (67) disposé sur un chemin optique entre l'unité de modification du chemin optique et le support d'enregistrement correspondant (80), pour focaliser les faisceaux lumineux effectifs sur le support d'enregistrement correspondant (80) ; et
un photodétecteur (71) pour recevoir les faisceaux lumineux effectifs incidents en provenance de l'unité de modification du chemin optique après qu'ils ont été réfléchis par le support d'enregistrement correspondant (80), et détecter un signal d'information et des signaux d'erreur à partir des faisceaux lumineux reçus ;
dans lequel le coupleur de lumière d'hologramme comporte un motif d'hologramme ;
**caractérisé en ce que** :
une profondeur de motif maximale Dₚ du motif d'hologramme respecte l'expression suivant 4000 nm ≤ Dₚ ≤ 7000 nm.

2. Lecteur optique selon la revendication 1, dans lequel le motif d'hologramme (61a) permet au premier faisceau lumineux pénétrant perpendiculairement à une surface du coupleur de lumière d'hologramme d'être directement transmis, et à la presque totalité du second faisceau lumineux pénétrant sous un certain angle d'être diffracté et transmis, de façon à ce que le second faisceau lumineux se propage parallèlement au premier faisceau lumineux.

3. Lecteur optique selon la revendication 1 ou 2, dans lequel le motif d'hologramme a une configuration échelonnée ayant au moins deux échelons.

4. Lecteur optique selon la revendication 1, dans lequel la tolérance de position entre les première et seconde sources de faisceau lumineux est commandée par ajustement de la position du coupleur de lumière d'hologramme (61) sur le chemin optique entre le module à dispositif générateur de lumière (50) et l'objectif (67).

5. Lecteur optique selon l'une quelconque des revendications 1 à 4, dans lequel l'unité de modification du chemin optique comprend :
une séparatrice de faisceaux polarisante (63) destinée à modifier le chemin de propagation d'un faisceau lumineux incident par transmission ou réflexion du faisceau lumineux incident en fonction de la polarisation du faisceau lumineux incident ; et
une lame quart d'onde (65) disposée sur le chemin optique entre la séparatrice de faisceaux polarisante (63) et l'objectif (67), pour modifier la polarisation d'un faisceau lumineux incident.

6. Lecteur optique selon l'une quelconque des revendications 1 à 5, dans lequel l'objectif (67) possède une surface de réception de lumière destinée à recevoir le premier ou second faisceau lumineux émis en provenance du module à dispositif générateur de lumière, et une surface d'émission de lumière située en face du support d'enregistrement correspondant, et dans lequel au moins l'une des surfaces de réception et de transmission de lumière de l'objectif est divisée en plusieurs sections par au moins une région annulaire (67b), les sections étant concentriques les unes par rapport aux autres et ayant différentes courbures asphériques.
